(19) **Europäisches Patentamt / European Patent Office / Office européen des brevets**

(11) **EP 2 766 200 B1**

(12) # FASCICULE DE BREVET EUROPEEN

(45) Date de publication et mention de la délivrance du brevet:
**09.08.2017 Bulletin 2017/32**

(21) Numéro de dépôt: **12770486.4**

(22) Date de dépôt: **10.10.2012**

(51) Int Cl.:
**B60C 1/00** *(2006.01)*          **C08K 3/36** *(2006.01)*
**C08K 9/02** *(2006.01)*          **C08J 3/22** *(2006.01)*

(86) Numéro de dépôt international:
**PCT/EP2012/070033**

(87) Numéro de publication internationale:
**WO 2013/053738 (18.04.2013 Gazette 2013/16)**

(54) **METHODE DE PREPARATION D'UN MELANGE MAITRE DE CAOUTCHOUC NATUREL ET DE SILICE**

VERFAHREN ZUR MASTERBATCH-HERSTELLUNG AUS NATURKAUTSCHUK UND SILICA

METHOD FOR PREPARING A MASTERBATCH OF NATURAL RUBBER AND SILICA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2011  FR 1159182**

(43) Date de publication de la demande:
**20.08.2014  Bulletin 2014/34**

(73) Titulaire: **Compagnie Générale des Etablissements Michelin**
**63000 Clermont-Ferrand (FR)**

(72) Inventeurs:
• **DE GAUDEMARIS, Benoît**
**F- 63040 Clermont-Ferrand Cédex 9 (FR)**

• **LAFFARGUE, Géraldine**
**F- 63040 Clermont-Ferrand Cédex 9 (FR)**
• **BERRIOT, Julien**
**F- 63040 Clermont-Ferrand Cédex 9 (FR)**

(74) Mandataire: **Cohen, Sylvia**
**Manufacture Française des Pneumatiques MICHELIN**
**23, place des Carmes-Déchaux**
**DGD/PI - F35 - Ladoux**
**63040 Clermont-Ferrand Cedex 9 (FR)**

(56) Documents cités:
**EP-A1- 1 834 980          WO-A1-2011/051215**
**WO-A2-2011/051216      FR-A1- 2 952 064**

**Description**

L'invention concerne la préparation d'un mélange-maître de caoutchouc naturel et de silice comprenant au moins une silice (modifiée) et un latex de caoutchouc naturel.

On entend par « mélange-maître » (couramment désigné par son nom anglais « masterbatch »): un composite à base d'élastomère dans lequel a été introduit une charge et éventuellement d'autres additifs.

La présente invention se rapporte en particulier à l'utilisation d'un tel mélange-maître pour la fabrication de compositions de caoutchoucs diéniques renforcées d'une charge inorganique, destinées à la fabrication de pneumatiques ou de produits semi-finis pour pneumatiques, en particulier de bandes de roulement de ces pneumatiques.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en oeuvre ("processability") plus difficile qu'en présence de noir de carbone.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/05300, WO00/05301.

Ces documents de l'art antérieur enseignent l'utilisation de silices du type HD présentant une surface spécifique BET comprise entre 100 et 250 $m^2/g$. En pratique, une silice HD à haute surface spécifique faisant référence dans le domaine des "Pneus Verts" est en particulier la silice "Zeosil 1165 MP" (surface BET égale à environ 160 $m^2/g$) commercialisée par la société Rhodia. L'utilisation de cette silice "Zeosil 1165 MP" permet d'obtenir de bons compromis en matière de performance pneumatique, notamment une résistance à l'usure et une résistance au roulement satisfaisantes.

L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc pour bandes de roulement de pneumatiques, des silices à haute surface spécifique, éventuellement supérieure à celle classiquement utilisée de l'ordre de 160 $m^2/g$, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en oeuvre malaisée.

Un autre type de solutions a été envisagé qui consiste, pour améliorer la dispersiblité de la charge dans la matrice élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une silice dispersée dans de l'eau, couramment appelée « slurry ». Cependant la mise en contact du latex d'élastomère et du slurry ne permet pas d'avoir une coagulation au sein du milieu liquide, coagulation qui devrait permettre d'obtenir un solide qui après séchage, aboutisse à l'obtention du mélange-maître d'élastomère et de silice souhaité.

En effet, les agrégats de silice sont typiquement hydrophiles dans la nature et ont une affinité avec l'eau, ainsi les agrégats de silice ont davantage d'affinité avec l'eau qu'avec les particules d'élastomère elles-mêmes.

Différentes solutions ont été proposées pour permettre néanmoins d'obtenir cette coagulation et une bonne dispersion de la charge dans la matrice élastomérique en phase « liquide » par l'utilisation combinée d'un agent permettant d'augmenter l'affinité entre l'élastomère et la silice, tel qu'un agent de couplage, et d'un agent permettant de réaliser la prise en masse, donc la coagulation, appelé agent de coagulation.

Ainsi par exemple le brevet US 5,763,388 propose l'incorporation de la silice dans le latex de caoutchouc en traitant la silice avec un agent de couplage, mélangeant la silice ainsi traitée en présence des agents de coagulation classiques.

Le brevet EP1321488 se propose également de mettre en contact une dispersion aqueuse avec de la silice chargée négativement et un latex d'élastomère diénique, avec une émulsion contenant un agent de couplage polysulfide, en présence d'un agent de coagulation tel qu'une polyamine.

Les demanderesses ont découvert de façon surprenante une méthode d'obtention d'un mélange-maître silice-élastomère préparé en phase « liquide » sans utiliser d'agent de coagulation, ni d'agent de couplage. Une telle méthode permet, de plus, non seulement d'atteindre un très bon taux de rendement (supérieur à 80 %massique) en respectant le taux de charge préalablement introduit et avec une bonne dispersion de la charge dans la matrice élastomérique.

Bien entendu, une telle méthode paraît d'autant plus intéressante si elle est mise en oeuvre avec des silices hautement dispersibles telles que présentées précédemment.

La méthode pour préparer un mélange-maître de caoutchouc naturel et de silice, conforme à l'invention, comprend les étapes successives suivantes :

- doper la silice avec du magnésium,
- préparer au moins une dispersion de la silice ainsi dopée dans de l'eau,
- mettre en contact et mélanger un latex de caoutchouc naturel de champ et la dispersion aqueuse de silice dopée pour obtenir un coagulum,
- récupérer le coagulum,
- sécher le coagulum récupéré pour obtenir le mélange maître.

Selon un mode de réalisation de la méthode, l'étape de récupération du coagulum est réalisée par une opération de filtrage.

Selon un autre mode de réalisation, l'étape de récupération du coagulum est réalisée par une opération de centrifugation.

Selon une variante de réalisation de l'invention, la silice est une silice précipitée.

Avantageusement la condition suivante est satisfaite : le taux de dopage par le magnésium de la silice est supérieur ou égale à (0,2*pH-1,4), et de préférence la deuxième condition qui suit est également satisfaite : taux de dopage par le magnésium de la silice est inférieur ou égal à (0,2*pH-0,8).

L'invention a également pour objet un mélange-maître de caoutchouc naturel et de silice préparé selon la méthode qui comprend les étapes successives suivantes :

- doper la silice avec du magnésium,
- préparer au moins une dispersion de la silice ainsi dopée dans de l'eau,
- mettre en contact et mélanger un latex de caoutchouc naturel de champ et la dispersion aqueuse de silice dopée pour obtenir un coagulum,
- récupérer le coagulum,
- sécher le coagulum récupéré pour obtenir le mélange maître.

L'invention a encore pour objet une composition de caoutchouc à base d'au moins un mélange-maître de caoutchouc naturel et de silice préparé selon la méthode conforme à l'invention précitée, ainsi qu'un article fini ou semi-fini, une bande de roulement de pneumatique, un pneumatique ou produit semi-fini comportant au moins une telle composition de caoutchouc.

On entend par les termes « doper » la silice avec du magnésium, le fait de modifier la surface de la silice de sorte à intégrer le magnésium dans la maille des couches périphériques de la silice et/ou à la surface de cette silice. Par extension, on nommera silice « dopée » magnésium, une silice possédant du magnésium dans la maille de ses couches périphériques et/ou à sa surface.

## I. - MESURES ET TESTS

### I-1) Mesure du dopage en magnésium

Cette méthode permet de doser le magnésium de surface des silices dopées par spectrométrie d'émission atomique (ICP-AES). Ces silices sont préparées par dopage d'une silice commerciale.

La silice n'étant pas digérée, cette méthode ne permet pas de doser le magnésium présent au coeur de la silice.

#### a) *Principe*

Le magnésium est solubilisé par l'acide sulfurique à chaud puis dosé par spectrométrie d'émission atomique couplée à un plasma induit (ICP-AES). Les teneurs en magnésium de surface se calculent en soustrayant les teneurs en magnésium de la silice commerciale de départ. La gamme d'étalonnage utilisée est de 0 à 20 mg/l de magnésium, deux mesures sont réalisées par échantillon.

#### b) *Appareillage*

- Balance de précision d'échelon 0.1 mg,
- Entonnoirs,
- Fioles jaugées de classe A de 100 ml,
- Fioles jaugées de classe A de 250 ml,
- Eprouvette de 10 ml ou distributeur d'acide de 10 ml,
- Eprouvette de 50 ml,
- Micropipette étalonnée à volume variable 0.1-1 ml (ex : Eppendorf),
- Micropipette étalonnée à volume variable 0.5-5 ml (ex : Eppendorf),
- Filtres à seringue en acétate de cellulose de diamètre de pores $0.45\mu m$,
- Piluliers pour passeur de 30 ml,
- Spectromètre ICP (ex : Jobin Yvon modèle Activa M).
- Erlenmeyers à col large de 250 ml.
- Bain de sable.

#### c) *Réactifs*

- Eau ultrapure
- Acide nitrique concentré (ex : RP NORMAPUR REF 20.422.297)

  d=1.41

  $\%HNO_3=65$

- Acide sulfurique concentré (ex : RP MERCK REF 1.00731.1000)

  d=1.84
  $\%H_2SO_4=95-97$

- Solution étalon de magnésium à 1 g/l (ex : MERCK REF HC 812641)

#### d) *Mode opératoire*

##### d)- 1- Préparation d'une solution d'acide sulfurique à 5% volumique

Dans une fiole de 1L de classe A, on introduit 200 ml d'eau déminéralisée à l'aide d'une éprouvette. On introduit ensuite 50 ml d'acide sulfurique concentré (3.4) à l'aide d'une éprouvette. On homogénéise l'ensemble, puis on attend le refroidissement de la solution. On complète au trait de jauge avec de l'eau déminéralisée.

d)-2- <u>Préparation des silices en système ouvert sur bain de sable</u>

Les mesures seront effectuées en double. Il est préférable de faire un blanc procédure lors de chaque série de mesures (préparation dans les mêmes conditions mais sans échantillon). Les silices brutes avant dopage seront également analysées.

- Dans un Erlenmeyer, on pèse 250 mg de silice.
- On verse 20 ml d'acide sulfurique à 5 % (§5.1).
- On chauffe sur bain de sable et on amène complètement à sec.
- On laisse refroidir.
- On rince les parois de l'Erlenmeyer avec un peu d'eau, puis on ajoute 12.5 ml d'acide nitrique concentré à 65 %.
- On porte à ébullition.
- On laisse refroidir, puis on transvase quantitativement dans une fiole jaugée de 250 ml.
- On complète au trait de jauge avec de l'eau déminéralisée.
- On filtre la solution à l'aide d'un filtre à seringue (0.45 $\mu$m)
- On fait l'analyse par ICP-AES.

d)-3- <u>Préparation de la gamme de calibration :</u>

<u>Préparation de la gamme d'étalonnage de le magnésium.</u>

Les réactifs présentés dans le tableau qui suit, correspondent aux concentrations précisées précédemment dans le paragraphe c).

| E0 | E1 | E2 | E3 | E4 | |
|----|------|----|------|----|---|
| 0 | 5 | 10 | 15 | 20 | mg/l de magnésium |
| 95 | 94.5 | 94 | 93.5 | 93 | ml d'eau ultrapure |
| 5 | 5 | 5 | 5 | 5 | ml d'acide nitrique à l'aide d'un distributeur |
| 0 | 0.5 | 1.0 | 1.5 | 2.0 | ml de solution étalon de magnésium 1000 mg/l à l'aide d'une micropipette |
| 100 | 100 | 100 | 100 | 100 | volume total (en ml) |

Ces étalons se conservent pendant 4 mois.

<u>Préparation d'un témoin de validation à 10 mg/l :</u>

Le témoin de vérification est préparé lors de chaque série de mesures de la même façon que les étalons ci-dessus en introduisant 1.0 ml de solution étalon de magnésium à 1000 mg/l d'un lot différent. Il permet de valider l'étalonnage. Le témoin de vérification ne se conserve pas après utilisation.

d)-4- <u>Dosage par ICP-AES :</u>

<u>Séquence d'analyse :</u>

1- Etalonnage
2- Témoin de validation à 10 mg/l (magnésium)
3- Echantillons + Blanc procédure
4- Etalon de vérification E4 (à 20 mg/l de magnésium)

<u>Validation de l'étalonnage :</u> pour une gamme de magnésium 0 - 20mg/l
Témoin de validation (valeur théorique : 10 mg/l)
Tolérances : 9.8 mg/l < [Magnésium] < 10.2 mg/l

<u>Validation de la séquence d'analyse (cette validation démontre qu'il n'y a pas eu de derive) :</u>pour gamme de ma-

gnésium 0 - 20 mg/l
Etalon de vérification, E4 (valeur théorique : 20mg/l)
Tolérances : 19.6 mg /l < [Magnésium] < 20.4 mg/l

Paramètres ICP-AES Activa :

*Réglages du plasma et de la nébulisation:*

- Chambre de nébulisation : type cyclonique (chambre de Scott)
- Vitesse de pompe : 20 tr/min
- Débit gaz plasmagène : 12 l/min
- Débit gaz de gainage : 0.2 l/min
- Débit gaz auxiliaire : 0 l/min
- Débit de nébulisation* : 0.87 ml/min
- Pression de nébulisation* : 2.97 bar
- Temps de rinçage : 20 s
- Temps de transfert : 30 s
- Temps de stabilisation : 20 s
- Nébuliseur : type concentrique (Meinhard)
- Puissance générateur : 1100 W

*Paramètres de détection :*

| Paramètres | Mg |
|---|---|
| Raies analytiques | $\lambda_{Mg}$ = 280.271 nm fond droit à 0.05 nm |
| | $\lambda_{Mg}$ = 285.213 nm fond droit à 0.025 nm |
| Temps d'intégration | 1 s |
| Mode de calcul | Moyen (3 points) |
| Zone d'observation | 1 - 512 |
| Fente d'entrée | 10 |
| Nombre de répliques | 3 |

*e) Résultats*

La teneur en magnésium de surface de l'échantillon (en % massique) : Mg surface = % Mg silice dopée - % Mg silice brute ; exemple : $Mg_{160\ MP}$ = 0 % massique

L'incertitude de mesure a été déterminée sur le spectromètre ICP-AES: Jobin Yvon Activa M à raison de trois mesures par jour pendant 6 jours. L'incertitude donnée est de trois écart types.
Pour une silice dopée en Mg à 0,5 % massique, l'incertitude est de $\pm$ 0.06 % massique, ce qui correspond à une incertitude relative de 0,12 %.

I-2) Mesure de pH

Le pH est mesuré selon la méthode suivante dérivant de la norme ISO 787/9 (pH d'une suspension à 5 % dans l'eau)

*:Appareillage :*

- pH mètre Mettler Toledo MP225
- Electrode à compensation de température automatique :

  - Electrode Inlab®Reach Pro (pour synthèses et pH des slurries)
  - Electrode Inlab®Solids Pro (pour pH des formulations)

- Agitateur magnétique chauffant Heidolph MR3003

*Petit matériel*

- Bécher en verre 100mL (diamètre : 4.7cm * hauteur : 7cm) pour pH d'une dispersion aqueuse de silice
- Bécher en verre 250mL (diamètre : 6.5cm * hauteur : 9.3cm) pour pH de formulation
- Barreaux aimantés adaptés à la taille des béchers
- Réacteur double enveloppe en verre de 5L

*Mode opératoire*

Mode opératoire des mesures du pH de dispersion aqueuse ou de formulation:

1/Etalonnage de l'électrode avec les solutions tampon à pH 4.01, 7.01 et 10.01
2/Dispersion aqueuse (ou formulation) agitée par agitation magnétique à 500tr/min
3/ Trempage de l'électrode dans le bécher et lecture du pH

Mode opératoire de la mesure du pH au cours des synthèses de dopage :

1/Etalonnage de l'électrode avec les solutions tampon à pH 4.01, 7.01 et 10.01
2/ Milieu réactionnel agité par agitation mécanique (env. 650tr/min)
3/ Trempage de l'électrode dans le réacteur et lecture du pH

I-3) Mesure du taux de charge par ATG

Ce mode opératoire a pour objet de quantifier les catégories de constituants des mélanges de caoutchouterie. On distingue 3 intervalles de température qui correspondent chacun à une catégorie de constituants :

- entre 250 et 550°C, correspondant aux matières organiques : élastomères, huiles, agents de vulcanisation...
- entre 550 et 750°C, correspondant à des pertes intermédiaires (matières charbonnées),
- au-delà de 750°C, correspondant aux cendres et produits minéraux : ZnO, silice éventuellement...

Il s'applique aussi bien aux mélanges crus qu'aux mélanges cuits.

a) - Appareillage

- Ensemble d'analyse thermogravimétrique sur un analyseur de marque METTLER TOLEDO : modèle TGA 851 ou TGA DSC1
- Balance au 1/100 mg marque et modèle de la balance
- Creusets alumine de 70$\mu$l (sans couvercle) Mettler Toledo réf 00024123
- Matériel divers de laboratoire : pinces, ciseaux....

b) - Principe

On suit les pertes de poids d'un échantillon de mélange soumis à une montée en température. Cette dernière se fait en 2 étapes :

1/ Chauffage de 25 à 550°C sous atmosphère inerte ($N_2$) pour évaporer les matières volatiles et réaliser la pyrolyse des matières organiques. La volatilité des produits qui en résultent entraîne une perte de poids correspondant dans un 1$^{er}$ temps (avant 300°C) aux matières volatiles puis aux matières organiques présentes initialement dans le mélange.

2/ Poursuite du chauffage jusqu'à 750°C sous atmosphère oxydante (Air ou $O_2$) pour réaliser la combustion du noir (et/ou matières charbonnées). La volatilité des produits qui en résulte entraîne une perte de poids correspondant à la quantité initiale de noir (et /ou matières charbonnées).

Les produits qui subsistent après ces traitements constituent les cendres. Il s'agit généralement de matériaux inorganiques type ZnO, silice...

c) - Mesures

*c)-1- Préparation des échantillons*

La quantité de produit analysé doit être pesée à 0.01mg près et comprise entre 20 et 30 mg.
Elle est ensuite placée dans un creuset en alumine de 70 $\mu$l (sans couvercle)

*c)-2- Définition de la « méthode » (programme de température)*

- On définit successivement les segments suivants :

  - 1$^{er}$ segment : dynamique de 25 à 550°C à 50°C/min, sous azote ( 40 ml/min)
  - 2$^{ème}$ segment : dynamique de 550 à 750°C à 10°C/min, sous air (ou O2) ( 40 ml/min)

- On active le champ « soustraire courbe à blanc ».

Toute mesure est automatiquement corrigée d'une courbe à blanc. Cette dernière est réalisée dans les mêmes conditions que la mesure, avec creuset vide. Elle est mémorisée et utilisée pour toutes les mesures suivantes (pas de nouvel essai à blanc obligatoire avant chaque mesure).

*c)-3- Lancement de la mesure*

On s'assure au préalable, en consultant la fenêtre de contrôle du four, que les débits d'azote et d'air sont convenablement réglés (40$\mu$l/min). Sinon les ajuster à l'aide des réglages situés sur la « boite à gaz ».

- Courbe à blanc

On réalise la courbe à blanc en suivant la procédure décrite dans le manuel d'utilisation du TGA

- Mesure

On réalise la mesure en suivant la procédure décrite dans le manuel d'utilisation du TGA

*c)-4- Exploitation de la courbe*

En suivant les instructions du manuel d'utilisation du TGA

- on sélectionne et on ouvre la courbe à exploiter
- on délimite sur cette courbe le 1$^{er}$ palier, correspondant aux matières volatiles, entre respectivement 25 et environ 250°C.
- on calcule la perte de poids correspondant au taux de matières volatiles (en %)
- on délimite sur cette courbe le 2$^{ème}$ palier, correspondant aux matières organiques, entre respectivement la température du 1$^{er}$ palier environ 250°C et 550°C.
- on calcule la perte de poids correspondant au taux de matières organiques (en %)
- on délimite sur cette courbe le 3$^{ème}$ palier, correspondant aux pertes, entre respectivement 550 et 750°C

- on calcule la perte de poids correspondant à ces pertes (en %)
- on calcule le résidu ou taux de cendres en %

*c)-5- Présence de composés volatiles*

Pour certains mélanges contenant des composés volatiles qui peuvent s'évaporer à température ambiante, il y a un risque de pertes de matière entre la préparation de l'échantillon et le départ effectif de la mesure. Ces pertes ne sont pas prises en compte par l'appareil.

Pour prendre en compte ces pertes et avoir la composition réelle du mélange, on peut procéder de la façon suivante :

On réalise les étapes c)-1 à c)-3 précédemment décrites avec les 2 consignes suivantes:

- lors de la préparation de l'échantillon : noter le poids du creuset vide (P0) et le poids de l'échantillon P1
- lors du lancement de la mesure : renseigner le champ "poids de creuset" par P0 et le champ "poids d'échantillon" par P1

Pour l'exploitation (étape c)-4), le TGA prend en compte, pour déterminer les pertes, la masse de l'échantillon P2 qu'il calcul au départ effectif de la mesure à partir du poids du creuset, ce qui est primordial pour le calcul du résidu ; P2 est calculé par le TGA en prenant en compte la masse P3 (Creuset + échantillon) à au temps T0 - P0. Le calcul des taux des différents constituants et du résidu est réalisé par rapport au poids d'échantillon P1 défini lors de la préparation et non par rapport à P2.

Le taux de matières volatiles alors calculé par l'appareil est erroné puisqu'une partie de MV, matières volatiles, (P1 - P2) s'est évaporée lors de l'attente entre la préparation et le début effectif de la mesure. Les MV doivent donc être recalculées manuellement :

- en masse MV mg = (P1 - P2) mg + pertes 1$^{er}$ palier mg
- en taux Tx MV % = MV mg / P1 * 100 ou 100 - résidu 1$^{er}$ palier %.

*c)-6- Taux de charge en pcmo*

Ce taux est exprimé en pcmo, pourcentage de matière organique et obtenu par le calcul, lorsque l'on interprète la mesure d'ATG avec la formule suivante :

$$\text{Tx charge (pcmo)} = [(D) / (B + C)] * 100$$

Dans laquelle B représente le pourcentage de matière organiques (intervalle entre 250 et 550°C), C le pourcentage de pertes intermédiaires (entre 550 et 750°C) et D le pourcentage de résidu (au-delà de 750°C).

I-4) Mesure du rendement de coagulation

Le rendement de coagulation correspond au rapport de la masse sèche récupérée (de laquelle a été ôtée la masse de matières volatiles telle qu'elle est définie dans le protocole de mesure de l'ATG dans les paragraphes précédents) sur la masse visée au départ, multiplié par cent.

## II. DESCRIPTION DETAILLEE DE L'INVENTION

La méthode pour préparer un mélange-maître de caoutchouc naturel et de silice selon l'invention comprend les étapes successives suivantes :

- doper la silice avec du magnésium,
- préparer une dispersion de la silice ainsi dopée dans de l'eau,
- mettre en contact et mélanger un latex de caoutchouc naturel de champ, en particulier un latex de caoutchouc naturel, et la dispersion de silice dopée,
- récupérer et sécher le mélange maître ainsi obtenu.

II-1) Préparation de la dispersion aqueuse de silice

Dans la première étape de la méthode, on dope la silice du magnésium.

Cette étape de « dopage » de la silice peut être avantageusement réalisé selon le protocole détaillé dans la demande de brevet WO 02/051750.

Le taux de dopage obtenu correspond au pourcentage en poids de magnésium pour cent parties en poids de silice.

Pour l'invention peut être utilisée toute silice ($SiO_2$) connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$.

On peut notamment, utiliser des silices hautement spécifiques (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La silice dopée obtenue est ensuite dispersée dans de l'eau, de préférence de sorte à obtenir une dispersion dont la viscosité est suffisante pour être aisément « manipulable ». On pourra par exemple réaliser une dispersion aqueuse de silice dopée avec un taux de silice dans l'eau de 4% en poids.

Avantageusement, la dispersion est sonifiée afin de permettre d'obtenir une stabilité des agrégats dans l'eau, ce qui permet d'améliorer la dispersion aqueuse de silice dopée dans le mélange maître ensuite réalisé.

Cette sonification peut notamment être réalisée à l'aide d'un générateur Vibracell fabriqué par SONICS et Materials Inc de 1500 Watts avec un convertisseur piezoélectrique avec cristal PZT (référence 75010), un booster pour la sonde et une sonde en alliage titane de diamètre 19mm (pour une hauteur de 127mm).

Il peut être utile d'ajouter à cette dispersion aqueuse de silice dopée, un agent acidifiant tels que des acides forts ou des acides faibles, pour permettre de modifier le pH de la dispersion aqueuse de silice dopée afin d'obtenir lors de la mise en contact des deux dispersions décrites dans ce qui suit, le pH de formulation visé.

L'homme du métier devra alors procéder à plusieurs mises en contact afin d'ajuster le pH de la dispersion aqueuse pour obtenir le pH de formulation souhaitée. En effet, l'homme du métier sait qu'il n'est pas possible de déterminer a priori en fonction des volumes versés et du pH de chacune des dispersions quel sera le pH de la formulation, du fait des très nombreuses variables liées à la nature du latex d'élastomère qui influent sur les évolutions de pH.

II-2) Latex de caoutchouc naturel

Comme dit précédemment, le latex d'élastomère est une forme particulière de l'élastomère qui se présente sous forme de particules d'élastomère dispersées dans l'eau.

Le caoutchouc naturel existe sous différentes formes comme le détail le chapitre 3 « Latex concentrates : properties and composition », de K.F. Gaseley, A.D.T. Gordon et T.D. Pendle dans «Naturel Rubber Science and Technology», A.D. Roberts, Oxford University Press - 1988. En particulier plusieurs formes de latex de caoutchouc naturel sont commercialisés : les latex de caoutchouc naturel dits « de champ » (« latex field »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration (les différentes catégories de latex de caoutchouc naturel concentrés sont répertoriées notamment selon la norme ASTM D 1076-06).

Le latex peut être utilisé directement ou être préalablement dilué dans de l'eau pour faciliter sa mise en oeuvre.

II-3) Mise en contact des deux dispersions

Les deux dispersions sont mises en contact. Pour permettre le bon mélange de ces solutions, celles-ci sont par exemple versées dans un bécher sous agitation magnétique.

On peut également utiliser tout type d'appareil permettant un mélange « efficace » de deux produits en phase liquide, ainsi on pourra utiliser un mélangeur statique tel que des mélangeurs statiques commercialisés par les sociétés Noritake Co., Limited, TAH aux USA, KOFLO aux USA, ou TOKUSHU KIKA KOGYO Co., Ltd. ou un mélangeur réalisant un haut cisaillement tel que des mélangeurs commercialisés par TOKUSHU KIKA KOGYO Co., Ltd., ou par la société PUC en Allemagne, par la société CAVITRON en Allemagne ou parla société SILVERSON au Royaume Uni.

Il est clair que plus l'étape de mélange est efficace, meilleure est la dispersion.

Lors de cette phase de mélange des deux dispersions, un coagulum d'élastomère et de silice se forme soit sous forme d'un seul élément solide dans la solution, soit sous forme de plusieurs éléments solides séparés.

Dès que la mise en contact des deux dispersions a eu lieu, on mesure le pH, nommé ici pH de formulation, de cette nouvelle dispersion selon le protocole décrit précédemment dans les tests.

De façon surprenante, on a constaté que pour obtenir effectivement un coagulum, avec un rendement de coagulation supérieur ou égal à 80 % et qui corresponde à l'obtention d'un mélange maître respectant le ratio initial en poids de charge par rapport à l'élastomère, ainsi un écart de 20% par rapport au ratio calculé initialement est considéré comme acceptable, il était nécessaire de satisfaire la condition : le taux de dopage par le magnésium de la silice est supérieur ou égal à $(0,2*pH-1,4)$.

On notera en particulier que le domaine dans lequel le taux de dopage par le magnésium de la silice est supérieur ou égal à $(0,2*pH-1,4)$ pH de formulation compris entre 8.5 et 10 avec un taux de dopage inférieur a 1% en poids est particulièrement intéressant.

Plus préférentiellement encore, la deuxième condition qui suit est également satisfaite : le magnésium de la silice est inférieur ou égal à $(0,2*pH-0,8)$.

Les volumes des deux dispersions à mettre en contact et en particulier le volume de dispersion de silice dépend du taux de silice visé pour le mélange-maître à réaliser. Ainsi le volume sera adapté en conséquence. Avantageusement le taux de silice visé pour le mélange maître est compris entre 20 et 150 pce (parties en poids pour cent parties d'élastomère), de préférence entre 30 à 100 pce et plus préférentiellement entre 30 et 90 pce, encore plus préférentiellement entre 30 et 70 pce.

II-4) Récupération du solide formé.

Le ou les solides récupérés sont filtrés ou centrifugés. En effet, l'opération de filtrage qui peut être réalisée à l'aide d'un tamis de filtration, peut s'avérer inadaptée lorsque le coagulum se présente sous forme de nombreux et petits éléments solides. Dans un tel cas, on réalise de préférence une opération de centrifugation supplémentaire. A l'issue de cette étape de filtrage ou de centrifugation, le coagulum obtenu est séché, par exemple à l'étuve.

A l'issue de cette opération, on procède à la mesure du taux de charge par ATG et le rendement de coagulation.

II-5) Composition de caoutchouc

Avantageusement les mélanges maîtres ainsi réalisés sont susceptibles d'être utilisé dans des compositions de caoutchouc, notamment pour pneumatique.

Avantageusement on pourra limiter le taux de magnésium présent dans le mélange-maître en limitant le taux de dopage de la silice à 4,5 % en poids.

Les compositions de caoutchouc pour pneumatique à base des mélanges maîtres selon l'invention, comportent également de façon connue un agent de couplage et un système de vulcanisation.

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-Z-X", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- Z représente un groupe divalent permettant de relier Y et X.

Des agents de couplage, notamment silice/ élastomère diénique ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telles que par exemple des fonctions polysulfure.

Parmi les composés alkoxysilane-polysulfure connus, doit être particulièrement cité le tétrasulfure de bis 3-triéthoxysilylpropyle (en abrégé "TESPT"), de formule $[(C_2H_5O)_3Si(CH_2)_3S_2]_2$, commercialisé notamment par la société Degussa sous la dénomination "Si69" (ou "X50S" lorsqu'il est supporté à 50% en poids sur du noir de carbone), sous la forme d'un mélange commercial de polysulfures $S_x$ avec une valeur moyenne pour x qui est proche de 4.

On notera qu'on peut envisager l'introduction de l'agent de couplage dans la préparation du mélange maître afin d'obtenir directement un mélange maître d'élastomère et de silice comportant également un agent de couplage.

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

Les additifs décrits précédemment, huile, anti-oxydant, agent de recouvrement, pourraient également être incorporés au mélange maître avant la formation du coagulum. Ces compositions peuvent notamment également contenir outre le mélange maître un ou plusieurs autres élastomères diéniques. On rappelle que par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

II-6). Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel l'invention, de tous les constituants de base des compositions de l'invention, à l'exception du système de vulcanisation, à savoir le mélange-maître, l'agent de couplage (s'il n'est pas déjà présent dans le mélange-maître) et le noir de carbone le cas échéant, sont incorporés de manière intime, par malaxage, au mélange maître au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Lorsqu'un agent de recouvrement est utilisé, son incorporation peut être réalisée en totalité pendant la phase non-productive, en même temps que la charge inorganique, ou bien en totalité pendant la phase productive, en même temps que le système de vulcanisation, ou encore fractionnée sur les deux phases successives.

Il convient de noter qu'il est possible d'introduire tout ou partie de l'agent de recouvrement sous une forme supportée (la mise sur support étant réalisée au préalable) sur un solide compatible avec les structures chimiques correspondant à ce composé. Par exemple, lors du fractionnement entre les deux phases successives ci-dessus, il peut être avantageux d'introduire la seconde partie de l'agent de recouvrement, sur le mélangeur externe, après une mise sur support afin de faciliter son incorporation et sa dispersion.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, tels que par exemple qu'oxyde de zinc, des acides gras comme l'acide stéarique, des dérivés guanidiques (en particulier diphénylguanidine), etc. Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

## III EXEMPLES DE REALISATION DE L'INVENTION

### III.1 Préparation de la silice dopée magnésium

Mode opératoire de la synthèse de dopage Mg pratiquée au laboratoire (dopage à 0,5%w visés) Synthèse de dopage Mg sur une silice commercialisée sous le nom Zéosil Z1165MP par la société Rhodia à 0,5%w visés (masse théorique de produit dopé produite : 166,87g)

- pour à 0,5%w Mg visé, on introduit 6%w Mg car le rendement de dopage est d'environ 8,33%w
- on maintient le pH à 7.5 lors de l'addition du sulfate de magnésium afin de prévenir l'augmentation de viscosité du milieu

### Matériel :

- 1 Réacteur double enveloppe de 5L, équipé d'une pâle d'agitation 6 pans en téflon
- 1 Moteur d'agitation Heidolf, modèle RZR2101
- 1 Bain thermostaté Huber, modèle CC245
- 2 pompes péristaltiques Masterflex (modèle 7523-25 pour 10 à 600tr/min, ou modèle 7523-37 pour 1 à 100tr/min), équipé d'une tête de pompe easy-load, modèle 7518-60
- 1 électrode de pH Mettler Toledo Inlab®Reach Pro étalonnée, à compensation de température + 1 pH mètre Mettler Toledo MP225
- 1 agitateur magnétique + 1 barreau aimanté
- Tuyaux en tygon, verrerie
- Homogénéiseur rotor-stator ultra-Turrax® T25B équipé d'un axe générateur garniture N type S25N-18G et générateur d'ultrasons Vibracell fabriqué par SONICS et Materials Inc de 1500 Watts avec un convertisseur piezoélectrique avec cristal PZT (référence 75010), un booster pour la sonde et une sonde en alliage titane de diamètre 19mm (pour une hauteur de 127mm)

Les réactifs sont présentés dans le tableau qui suit :

| Vitesses d'addition dans le milieu | Réactifs | Précisions | Quantités |
| --- | --- | --- | --- |
| _ | 160MP | MV : 6.48%w | 157,43g équivalent sec soit 168,33g pesés |
| _ | Eau déminéralisée | _ | 3.935L |
| 15mL/min | Mg(SO4), 7H2O | pureté sel : 99% | 96,90g dans 182g eau |
| 11-15mL/min | NaOH | 5M | quelques mL |
| 15mL/min | H2SO4 | 0.82M | quelques mL |

### Mode opératoire:

On réalise un cisaillement du contenu de 2 béchers [ 2 * (83,97g de 160MP dans 485,17g eau)] à l'aide de l'homogénéiseur précité pendant 5min à 17500tr/min puis par sonification à 100% de la puissance maximale d'une sonde de 1500W, pendant 8min.

On introduit la suspension ainsi cisaillée dans le réacteur et on additionne 2964,67mL d'eau déminéralisée pour obtenir une concentration initiale en silice de 40g/L soit 3.8%.

On agite le milieu à 650tr/min, et on le chauffe à 60°C (contrôle de la température du milieu à l'aide d'une sonde de température intégrée à l'électrode).

On additionne le sel Mg(SO$_4$), 7H$_2$O à 15mL/min et on stabilise le pH du milieu à 7.5 par addition simultanée de soude

On laisse le milieu réactionnel sous agitation et chauffage pendant 30minutes (régulation du pH à 7.5), puis on abaisse le pH à 4.5 par addition d'H$_2$SO$_4$.

On laisse sous agitation et température à nouveau pendant 10min avec stabilisation du pH à 4.5, puis on essore et on lave le gâteau de charge ainsi réalisé avec 10L d'eau déminéralisée, à l'aide d'une essoreuse de type RC30VxR commercialisé par la société Rousselet Centrifugation S.A.

Le gâteau obtenu est remis en suspension dans de l'eau déminéralisée à une concentration d'environ 10%w.

On réalise une mesure de matière volatile sur la suspension contenue dans le flacon de suspension (en vue de son utilisation lors de la fabrication de mélanges maîtres) pour avoir connaissance de la concentration massique exacte de la suspension.

*Matériel :*

- Halogen Moisture Analyzer (=thermobalance) mettler toledo, modèle HR73, relié à un ordinateur
- coupelle magnésium jetable (consommable adapté à l'appareil).

*Mode opératoire :*

Après avoir renseigné les informations sur l'échantillon, les conditions de mesure (160°C sans rampe de température, durée de 30minutes) et réalisé le tarage de la coupelle de magnésium, on introduit environ 2.5g d'échantillon dans la coupelle et on lance la mesure.

Le protocole à suivre pour des taux de dopage différents est identique à l'exception de la quantité de sel précurseur de magnésium à introduire ainsi que le résume le tableau 1 qui suit dans lequel apparaissent les quantités de sel de magnésium utilisé selon les taux de dopage visé.

Tableau 1

| Dopage Mg | |
|---|---|
| taux de dopage visé (% en poids) | masse de sel de magnésium (g) |
| 0,5 | 96,9 |
| 0,25 | 48,45 |

On notera que l'homme du métier saura ajuster les quantités de réactif de sel de Mg(SO$_4$) afin d'obtenir le taux de dopage souhaité, en extrapolant a partir de ces valeurs.

III.2 Préparation des mélanges- maîtres

Les silices dopées magnésium précédemment obtenues sont dispersées dans de l'eau de sorte à obtenir une concentration de 4% en poids de silice dans l'eau.

Chaque dispersion de silice sonifiée puis laissée sous agitation pendant 10minutes (ajustement éventuel du pH lors de la dernière minute), est mise en contact avec un latex de caoutchouc naturel de champ maintenu sous agitation magnétique, la dispersion aqueuse de silice étant versée très rapidement dans ce latex.

On adapte le volume de la dispersion aqueuse de silice dopée par rapport au volume du latex en fonction de la concentration de la silice et de la concentration du latex, pour avoir lors de la mise en contact des deux dispersions (silice et latex d'élastomère) le taux de charge souhaité.

Pour les exemples on a choisi une quantité de silice de 50 parties en poids pour cent parties d'élastomère qui correspond ici à 50 pcmo (en effet les mélanges maîtres décrits ici ne comprennent que la silice et l'élastomère diénique).

Dès que l'ensemble de la dispersion aqueuse de silice dopée a été versé, l'électrode de mesure de pH est introduite dans le mélange afin de réaliser la mesure du pH de formulation.

Comme cela a été expliqué précédemment, pour obtenir le pH désiré il faut ajuster le pH de la dispersion aqueuse de silice dopée après cisaillement de celle-ci mais avant sa mise en contact avec le latex. Il est donc nécessaire de procéder à une expérimentation pour ajuster le pH de la dispersion aqueuse de silice dopée.

Le mélange est maintenu quelques minutes sous agitation magnétique avant récupération du coagulum formé. Afin d'avoir pour les différents essais des conditions identiques du mode opératoire, le coagulum formé ou les solides formés (couramment appelés « crumbs ») sont centrifugés, y compris dans les cas où l'aspect visuel du coagulum permettait d'envisager une opération de filtrage.

La centrifugation est réalisée après transfert dans un flacon en nalgène de 250mL à l'aide d'une centrifugeuse à godets Sigma 4K15 à 8000 tour/min pendant 10 minutes.

Le coagulum ainsi récupéré est séché sous sorbonne à température ambiante pendant 24 heures puis sous vide en étuve pendant 24h à 65°C sous 300mbar afin d'éliminer les dernières traces d'eau.

On procède alors à la mesure du taux de charge par ATG et du rendement de coagulation.

III-3 Exemple 1

Cet exemple a pour but de mettre en évidence le bon fonctionnement de la méthode conforme à l'invention, en particulier vis-à-vis du pH de formulation mesuré pour un taux de dopage de la silice donné.

Les essais E1, E2 et E3 ont été réalisés conformément au procédé détaillé dans le paragraphe précédent avec :

- un latex de champ de caoutchouc naturel provenant de la Société Africaine des Plantations d'Hévéas (SAPH) avec un pourcentage en poids d'ammoniac $NH_4(OH)$ de 0,71 et un pourcentage en poids d'extrait sec à 160°C pendant 30 minutes de 37,2,
- une silice dopée magnésium avec un taux de dopage de 0,5% en poids,
- une quantité de silice lors de la mise en contact des deux dispersions de 50 pce.

La seule différence entre ces quatre essais consiste, lors du procédé opératoire détaillé précédemment, en la modification du pH de la dispersion aqueuse de silice dopée afin de modifier le pH de formulation.

Ainsi les essais E1, E2 et E3 se distinguent les uns des autres par leur pH de formulation lors de la mise en contact des dispersions (dispersion aqueuse de silice et latex d'élastomère) comme suit:

- pour E1, le pH de formulation était de 4,
- pour E2, le pH de formulation était de 6,5,
- pour E3, le pH de formulation était de 9,5.

Les résultats obtenus (rendement et taux de charge) pour ces trois essais sont présentés dans le tableau 2 qui suit :

Tableau 2

| Essais | pH de formulation | Rendement (% en poids) | Taux de charge (pcmo) |
|--------|-------------------|------------------------|-----------------------|
| E1 | 4 | - | - |
| E2 | 6,5 | 91,1 | 57,0 |
| E3 | 9,5 | 89,5 | 54,3 |

On constate que l'essai E1 (ayant un pH de formulation de 4) n'a pas permis d'obtenir une coagulation de l'élastomère avec la silice dopée. Dans cet essai, il s'est produit une démixion de la silice et du latex lors de l'étape de récupération par centrifugation, aucun coagulum n'a donc été obtenu.

Pour les essais E2 et E3, on obtient à la fois des taux de silice acceptables (compris entre 40pcmo et 60pcmo) et un rendement supérieur à 80%.

III-4 Exemple 2

Cet exemple a pour but de mettre en évidence le bon fonctionnement de la méthode conforme à l'invention, en particulier vis-à-vis du pH de formulation mesuré à un taux de dopage donné différent de l'exemple 1.

Les essais E'1, E'2 et E'3 ont été réalisés conformément au procédé détaillé dans le paragraphe précédent avec :

- un latex concentré de caoutchouc naturel identique à celui de l'exemple 1
- une silice dopée magnésium avec un taux de dopage de 0,25% en poids,
- une quantité de silice lors de la mise en contact des deux dispersions de 50 pce. Comme dans l'exemple 1, la seule différence entre ces trois essais consiste, lors du procédé opératoire détaillé précédemment, en la modification du pH de la dispersion aqueuse de silice dopée afin de modifier le pH de formulation, ainsi :

  - pour E'1, le pH de formulation est de 5,2,
  - pour E'2, le pH de formulation est de 6,3,
  - pour E'3, le pH de formulation est de 8.

Les résultats obtenus (rendement et taux de charge) pour ces trois essais sont présentés dans le tableau 3 qui suit :

Tableau 3

| Essais | pH de formulation | Rendement (% en poids) | Taux de charge (pcmo) |
|--------|-------------------|------------------------|-----------------------|
| E'1 | 5,2 | - | - |
| E'2 | 6,3 | 92,5 | 62,4 |
| E'3 | 8 | 89,1 | 58,1 |

On constate pour l'essai E'1 (dont le pH de formulation est 5,2) n'a pas permis d'obtenir un mélange maître (démixion de la silice et du latex lors de l'étape de récupération par centrifugation). Par contre les essais E'2 et E'3, permettent d'obtenir des mélanges maîtres avec à la fois des taux de silice acceptables (compris entre 40pcmo et 60pcmo) et un rendement de coagulation supérieur à 80%.

Ces deux exemples font apparaître clairement qu'il est important d'être dans un domaine de pH de formulation donné pour un taux de dopage de la silice donné, pour répondre aux critères souhaités en terme de taux de charge respecté et de rendement obtenu.

## Revendications

1. Méthode pour préparer un mélange-maître de caoutchouc naturel et de silice comprenant les étapes successives suivantes :

   - doper la silice avec du magnésium,
   - préparer au moins une dispersion de la silice ainsi dopée dans de l'eau,
   - mettre en contact un latex de caoutchouc naturel de champ et la dispersion aqueuse de silice dopée et mesurer le pH de formulation et mélanger ledit latex et ladite dispersion pour obtenir un coagulum,
   - récupérer le coagulum,
   - sécher le coagulum récupéré pour obtenir le mélange maître ;

   dans laquelle la condition suivante est satisfaite: le taux de dopage par le magnésium de la silice est supérieur ou égal à (0,2*pH-1,4), le pH étant le pH de formulation et
   dans laquelle la condition suivante est également satisfaite : le taux de dopage par le magnésium de la silice est inférieur ou égal à (0,2*pH-0,8), le pH étant le pH de formulation.

2. Méthode selon revendication 1, dans laquelle l'étape de récupération du coagulum est réalisée par une opération de filtrage ou de centrifugation.

3. Méthode selon l'une quelconque des revendications 1 ou 2, dans laquelle la silice est une silice précipitée.

4. Méthode selon l'une quelconque des revendications 1 à 3, dans laquelle la quantité de silice lors de la mise en contact de deux dispersions est comprise entre 20 pce et 150 pce, parties pour cent parties en poids d'élastomère, de préférence comprise entre 30 pce et 100 pce.

5. Méthode selon l'une quelconque des revendications précédentes, dans laquelle une dispersion aqueuse d'agent de couplage est ajouté avant ou lors de la mise en contact de la dispersion aqueuse de silice dopée magnésium et du latex de caoutchouc naturel.

6. Mélange-maître de caoutchouc naturel et de silice préparé selon l'une quelconque des revendications 1 à 5.

7. Mélange-maître selon la revendication 6, dans lequel le taux de silice est compris entre 30 pce et 100 pce.

8. Composition de caoutchouc à base d'au moins un mélange-maître de caoutchouc naturel et de silice préparé selon l'une quelconque des revendications 1 à 7.

9. Article fini ou semi-fini comportant une composition selon la revendication 8.

10. Bande de roulement de pneumatique comportant une composition selon la revendication 8.

11. Pneumatique ou produit semi-fini comportant au moins une composition de caoutchouc selon la revendication 8.


**Patentansprüche**

1. Verfahren zur Herstellung einer Vormischung aus natürlichem Kautschuk und Siliciumdioxid, wobei es nacheinander die folgenden Schritte umfasst:

   - Dotieren des Siliciumdioxids mit Magnesium,
   - Herstellen mindestens einer Dispersion des Siliciumdioxids, welches auf diese Weise dotiert wurde, in Wasser,
   - Inkontaktbringen eines Latex aus natürlichem Plantagen-Kautschuk mit der wässrigen Dispersion von dotiertem Siliciumdioxid und Messen des pH-Werts der Formulierung, und Vermischen des Latex und der Dispersion, um ein Koagulat zu erhalten,
   - Gewinnen des Koagulats,
   - Trocken des gewonnenen Koagulats, um die Vormischung zu erhalten;

   wobei die folgende Bedingung erfüllt ist: das Siliciumdioxid weist bezüglich des Magnesiums eines Dotiergehalt von mindestens (0,2 * pH - 1,4) auf, wobei pH den pH-Wert der Formulierung bezeichnet und wobei die folgende Bedingung ebenfalls erfüllt ist: das Siliciumdioxid weist bezüglich des Magnesiums eines Dotiergehalt von höchstens (0,2 * pH - 0,8) auf, wobei pH den pH-Wert der Formulierung bezeichnet.

2. Verfahren nach Anspruch 1, wobei der Schritt des Gewinnens des Koagulats durch einen Filtrier- oder Zentrifugationsvorgang erfolgt.

3. Verfahren nach einem beliebigen der Ansprüche 1 oder 2, wobei es sich bei dem Siliciumdioxid um ein gefälltes Siliciumdioxid handelt.

4. Verfahren nach einem beliebigen der Ansprüche 1 bis 3, wobei die Menge an Siliciumdioxid beim Inkontaktbringen der beiden Dispersionen im Bereich von 20 phr bis 150 phr, parts par hundred rubber (Teile auf einhundert Teile Elastomer), vorzugsweise im Bereich von 30 phr bis 100 phr liegt.

5. Verfahren nach einem beliebigen der vorhergehenden Ansprüche, wobei vor oder während des Inkontaktbringens der wässrigen Dispersion von magnesiumdotiertem Siliciumdioxid mit dem Latex aus natürlichem Kautschuk eine wässrige Dispersion eines Kupplungsmittels zugesetzt wird.

6. Vormischung aus natürlichem Kautschuk und Siliciumdioxid, die nach einem beliebigen der Ansprüche 1 bis 5 hergestellt ist.

7. Vormischung nach Anspruch 6, wobei der Gehalt an Siliciumdioxid im Bereich von 30 phr bis 100 phr liegt.

8. Kautschukzusammensetzung auf Grundlage mindestens einer Vormischung aus natürlichem Kautschuk und Siliciumdioxid, die nach einem beliebigen der Ansprüche 1 bis 7 hergestellt ist.

9. Gebrauchsfertiger Gegenstand oder Halbzeug, der/das eine Zusammensetzung nach Anspruch 8 aufweist.

**10.** Reifenlauffläche, die eine Zusammensetzung nach Anspruch 8 aufweist.

**11.** Luftreifen oder Halbzeug, der/das mindestens eine Kautschukzusammensetzung nach Anspruch 8 aufweist.

**Claims**

**1.** Method for preparing a silica/natural rubber masterbatch, comprising the following successive steps:

- doping the silica with magnesium;
- preparing at least one dispersion of the resulting doped silica in water;
- bringing a natural rubber field latex into contact with the aqueous doped-silica dispersion, measuring the formulation pH and mixing said latex and said dispersion together so as to obtain a coagulum;
- recovering the coagulum; and
- drying the recovered coagulum so as to obtain the masterbatch;

wherein the following condition is met: the level of doping by the magnesium of the silica is higher than or equal to (0.2*pH-1.4), the pH being the formulation pH and
wherein the following condition is also met: the level of doping by the magnesium of the silica is lower than or equal to (0.2*pH-0.8), the pH being the formulation pH.

**2.** Method according to Claim 1, in which the step of recovering the coagulum is carried out by a filtering operation or a centrifuging operation.

**3.** Method according to either of Claims 1 and 2, in which the silica is a precipitated silica.

**4.** Method according to any one of Claims 1 to 3, in which the amount of silica, upon bringing the two dispersions into contact with each other, is between 20 phr and 150 phr (parts per one hundred parts by weight of elastomer) and preferably between 30 phr and 100 phr.

**5.** Method according to any one of the preceding claims, in which an aqueous coupling agent dispersion is added before or upon bringing the aqueous magnesium-doped-silica dispersion into contact with the natural rubber latex.

**6.** Silica/natural rubber masterbatch prepared according to any one of Claims 1 to 5.

**7.** Masterbatch according to Claim 6, in which the silica content is between 30 phr and 100 phr.

**8.** Rubber composition based on at least one silica/natural rubber masterbatch prepared according to any one of Claims 1 to 7.

**9.** Finished or semi-finished article comprising a composition according to Claim 8.

**10.** Tyre tread comprising a composition according to Claim 8.

**11.** Tyre or semi-finished product comprising at least one rubber composition according to Claim 8.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 501227 A
- EP 692492 A
- EP 692493 A
- EP 735088 A
- EP 767206 A
- EP 786493 A
- EP 881252 A
- WO 9902590 A
- WO 9902601 A
- WO 9902602 A
- WO 9906480 A
- WO 0005300 A
- WO 0005301 A
- US 5763388 A
- EP 1321488 A
- WO 02051750 A
- WO 0316837 A
- WO 0210269 A

**Littérature non-brevet citée dans la description**

- Latex concentrates : properties and composition. **K.F. GASELEY ; A.D.T. GORDON ; T.D. PENDLE.** Naturel Rubber Science and Technology. Oxford University Press, 1988